(19) Europäisches Patentamt
European Patent Office
Office européen des brevets

(11) EP 0 478 031 B1

(12) **FASCICULE DE BREVET EUROPEEN**

(45) Date de publication et mention
de la délivrance du brevet:
**08.05.1996 Bulletin 1996/19**

(51) Int Cl.[6]: **C08F 10/00**, C08F 4/642

(21) Numéro de dépôt: **91202166.4**

(22) Date de dépôt: **24.08.1991**

(54) **Composition cocatalytique utilisable pour la polymérisation des alpha-oléfines**

Cokatalysatorzusammensetzung zur Anwendung bei der Alpha-Olefinpolymerisation

Cocatalytic composition to use in alpha-olefin polymerisation

(84) Etats contractants désignés:
**AT BE DE ES FR GB IT NL SE**

(30) Priorité: **30.08.1990 BE 9000839**

(43) Date de publication de la demande:
**01.04.1992 Bulletin 1992/14**

(73) Titulaire: **SOLVAY (Société Anonyme)**
**B-1050 Bruxelles (BE)**

(72) Inventeurs:
• **Fiasse, Paul**
**Houston, TX 77062 (US)**

• **Collette, Hervé**
**B-5000 Namur (BE)**

(74) Mandataire: **Marckx, Frieda et al**
**Solvay S.A.**
**Département de la Propriété Industrielle**
**310, rue de Ransbeek**
**B-1120 Bruxelles (BE)**

(56) Documents cités:
EP-A- 0 021 753        EP-A- 0 261 727
GB-A- 2 061 976        LU-A- 45 585

**Description**

La présente invention concerne des compositions cocatalytiques utilisables pour la polymérisation des alpha-oléfines. Elle concerne aussi des systèmes catalytiques comprenant ces compositions ainsi que des solides contenant un halogénure du titane. Elle concerne encore un procédé pour la polymérisation des alpha-oléfines, en particulier pour la polymérisation stéréospécifique du propylène, effectué en présence de ces systèmes.

Il est connu de polymériser stéréospécifiquement les alpha-oléfines telles que le propylène au moyen de systèmes catalytiques comprenant un cocatalyseur constitué d'un composé organométallique tel qu'un alkylaluminium éventuellement halogéné conjointement avec un constituant solide contenant un halogénure du titane.

Il est connu que, parmi les alkylaluminiums halogénés, les dihalogénures d'alkylaluminium ne conviennent pas pour la polymérisation stéréospécifique des alpha-oléfines, sauf lorsqu'ils sont additionnés de composés électrodonneurs (A. D. Ketley, The Stereochemistry of Macromolecules, volume 1, 1967, pages 24 et 27). Les alkylaluminiums halogénés préférés, parce qu'ils confèrent aux systèmes catalytiques sus-mentionnés une stéréospécificité maximale, sont les halogénures de dialkylaluminium purifiés de manière à en éliminer les impuretés nocives telles que les trialkylamuniums et les hydrures de dialkylaluminium [voir par exemple brevet US-A-3100218 (MONSANTO CHEM. CO)].

De nombreux systèmes catalytiques de ce type sont décrits dans la littérature. On a par exemple décrit, dans le brevet CS-A-120142 (JIRI MEJZLIK et coll.), tel que résumé dans Chemical Abstracts, volume 68, 1968, page 5, référence 69556 g, la polymérisation du propylène en présence d'un système catalytique comprenant un trichlorure de titane et de chlorure de diéthylaluminium additionné de 1 à 30 % de son poids de dichlorure d'éthylaluminium. L'augmentation de stéréospécificité obtenue s'accompagne d'une diminution de la productivité.

Dans le brevet US-A-4400494, on a décrit la polymérisation du propylène en phase gazeuse en présence d'un système catalytique comprenant un constituant contenant du titane réduit et un halogénure d'alkylaluminium dont le rapport atomique halogène/aluminium est compris entre 0,89 et 0,98. La présence d'additifs complémentaires à ces systèmes, préconisée dans ce brevet (colonne 5, lignes 26 à 38), les rend instables.

Par ailleurs l'exemple 1 de la demande de brevet EP-A-0069461 (TOA NENRYO) KOGYO), décrit la polymérisation du propylène en présence d'un système comprenant un constituant catalytique solide à base de trichlorure de titane complexé, de chlorure de diéthylaluminium et de benzoate d'éthyle, le chlorure de diéthylaluminium étant utilisé à raison de 15 moles par atomegramme de titane présent dans le constituant catalytique solide et le benzoate d'éthyle à raison de 0,02 mole par mole de chlorure de diéthylaluminium. Le polymère obtenu doit être épuré en résidus catalytiques.

On a aussi décrit, dans la publication de la demande de brevet JA-A-7231703 (TOKUYAMA SODA), la polymérisation du propylène dans le monomère liquide en présence d'un mélange de trichlorure de titane et d'un halogénure de dialkylaluminium auquel on a ajouté 0,001 à 0,1 mole de dihalogénure d'alkylaluminium par mole d'halogénure de dialkylaluminium et, à titre optionnel, un composé choisi parmi les polyamides et les polyéthers. Si ces systèmes paraissent améliorer les propriétés mécaniques du polymère obtenu, l'incorporation du dihalogénure d'alkylaluminium n'a pas d'effet bénéfique sur la stéréospécificité. On constate, en outre, que la productivité du système catalytique diminue lorsque la quantité de dihalogénure d'alkylaluminium augmente.

La demande de brevet français FR-A-2551759 (NORTHERN PETROCHEMICAL Co.) décrit la polymérisation du propylène en présence d'un système catalytique constitué par le mélange successif d'un composé comprenant du trichlorure de titane co-cristallisé avec du trichlorure d'aluminium, modifié par broyage avec du benzoate de butyle et lavé au propylène liquide, du benzoate de butyle et du chlorure de diéthylaluminium. Pour augmenter la productivité de ces systèmes catalytiques, on utilise un chlorure d'éthylaluminium de rapport atomique (Cl)/(Al) inférieur à 1.

La plupart des systèmes catalytiques décrits ci-dessus impliquent la polymérisation du propylène en présence d'un solide catalytique à base d'un halogénure de titane, d'un composé organoaluminique halogéné et d'un composé électrodonneur. Etant donné leur importance industrielle, ces systèmes catalytiques et en particulier les mélanges comprenant un composé organoaluminique et un composé électrodonneur ont fait l'objet de nombreuses études théoriques (voir par exemple S. Pasynkiewicz, Pure Appl. Chem., 1972, 30, pg. 509-521 et K.B.Starowieyski and all, J. Organomet. Chem., 1976, 117, pg. C1 à C3). Il ressort de ces études que la mise en contact d'un composé organoaluminique avec un composé électrodonneur donne lieu à la formation de complexes instables qui se dégradent pour former un mélange complexe qui évolue au cours du temps. La préparation de telles solutions longtemps avant leur utilisation en polymérisation est dès lors difficilement concevable.

La présente invention vise à fournir des compositions cocatalytiques susceptibles d'être stockées pendant des périodes assez longues sans que leurs performances catalytiques ne soient altérées et ne présentant pas les inconvénients inhérents à l'utilisation des catalyseurs connus présentant d'excellentes propriétés catalytiques.

On a ainsi trouvé que la combinaison de certains composés organoaluminiques halogénés avec des composés organiques électrodonneurs particuliers dans des rapports déterminés conduit à de nouvelles compositions cocatalytiques d'utilisation aisée en polymérisation et dont les performances catalytiques ne sont pas altérées lors d'un stockage de plusieurs semaines voire plusieurs mois.

On a aussi trouvé que l'association de ces compositions avec certains solides catalytiques contenant un halogénure du titane permet d'obtenir, sans qu'il soit nécessaire de mettre en oeuvre de grandes quantités de composé électrodonneur, des systèmes catalytiques assurant un compromis idéal entre la productivité et la stéréospécificité.

La présente invention concerne dès lors, à titre principal, une composition cocatalytique résultant de la mise en contact d'un halogénure organoaluminique (A) avec un composé organique électrodonneur particulier (ED) choisi parmi les esters, les amides et les cétones, l'halogénure organoaluminique (A) présentant un rapport atomique halogène (X) /aluminium (Al) supérieur à 1 et inférieur à 1,3, l'halogénure (A) et le composé (ED) étant mis en oeuvre dans un rapport molaire halogénure (A)/composé (ED) supérieur à 20, ladite mise en contact étant effectuée dans des conditions non polymérisantes, en l'absence d'alpha-oléfine et de solide contenant un halogénure du titane.

L'halogénure organoaluminique (A) utilisable pour préparer la composition cocatalytique selon l'invention peut être représenté par la formule globale :

$$AlR_m^1 R_n^2 X_p \qquad\qquad (I)$$

dans laquelle

- R$^1$ est choisi parmi les radicaux alkyles, linéaires ou branchés, contenant de 2 à 8 atomes de carbone ;
- R$^2$ est choisi parmi les radicaux alkyles, linéaires ou branchés contenant de 2 à 8 atomes de carbone et les radicaux aryloxy, éventuellement substitués, contenant de 6 à 35 atomes de carbone ;
- X est un halogène ;
- m et n représentent chacun un nombre quelconque tel que $0 \leq m < 2$ et $0 \leq n < 2$ et p représente un nombre tel que $1 < p < 1{,}3$, la somme de m, n et p valant 3.

Dans la formule (I), X est de préférence le chlore, m représente de préférence un nombre tel que $1 \leq m \leq 1{,}95$ et p représente de préférence un nombre tel que $1 < p < 1{,}15$.

Dans la formule (I), p est généralement supérieur à 1,005, de préférence supérieur à 1,01, plus particulièrement supérieur à 1,015. Dans cette formule (I), p est en général inférieur à 1,1, de préférence inférieur à 1,08, plus particulièrement inférieur à 1,06.

Comme le montrent notamment les valeurs attribuées à p dans la formule (I), l'halogénure organoaluminique (A) utilisable selon l'invention n'est pas un composé organoaluminique défini pur mais un mélange de composés organoaluminiques différents en quantités appropriées à l'obtention de compositions présentant un rapport atomique $(X)/(Al)$ supérieur à 1 et inférieur à 1,3 et dont la structure brute correspond à la formule (I).

A titre d'exemples d'halogénures (A) correspondant à la formule globale (I), on peut citer : les halogénures d'alkylaluminiums, tels que les chlorures d'éthyl-, n-propyl- et i-butyl-aluminium, les fluorures, bromures et iodures d'éthylaluminium ; les halogénures d'alkoxyaluminiums, tels que les chlorures d'éthoxyaluminium et les mélanges des composés ci-dessus en proportions appropriées.

D'autres exemples d'halogénures (A) comprennent les halogénures d'alkylalkoxy- et les halogénures d'alkylaryloxyaluminiums ; ces composés peuvent être obtenus de manière connue par réaction d'alkylaluminiums halogénés avec un alcool, un phénol ou de l'oxygène; à titre d'halogénures d'alkylalkoxyaluminiums utilisables, on peut citer le chlorure d'éthyléthoxyaluminium, le chlorure d'isobutyléthoxyaluminium, le chlorure d'éthylbutoxyaluminium et leurs mélanges ; à titre d'halogénures d'alkylaryloxyaluminiums utilisables, on peut citer le chlorure d'éthylphénoxyaluminium.

Une classe particulière d'halogénures (A) comprend les produits de la réaction d'alkylaluminiums halogénés avec des composés hydroxyaromatiques dont le groupe hydroxyle est stériquement empêché, ainsi que les mélanges de ces produits avec les alkylaluminiums halogénés dont ils sont issus.

Les composés hydroxyaromatiques dont le groupe hydroxyle est stériquement empêché sont généralement choisis parmi les hydroxyarylènes mono- ou polycycliques substitués par un radical alkyle secondaire ou tertiaire dans les deux positions ortho par rapport au groupe hydroxyle et, de préférence, parmi les phénols di-tert-alkylés dans les positions ortho par rapport aux groupes hydroxyles et les esters de l'acide 3-(3',5'-di-tert-butyl-4'-hydroxyphényl)propionique. Parmi ces composés, les meilleurs résultats ont été obtenus avec le 3-(3',5'-di-tert-butyl-4'-hydroxyphényl) propionate de n-octadécyle et avec le 2,6-di-tert-butyl-4-méthyl-phénol.

Pour obtenir pareils halogénures organoaluminiques (A), on peut mettre l'alkylaluminium halogéné de teneur en halogène appropriée et le composé hydroxyaromatique préalablement en contact, au rapport molaire alkylaluminium halogéné/composé hydroxyaromatique compris entre 100 et 1, de préférence entre 60 et 5, en particulier entre 50 et 10, au sein d'un diluant hydrocarboné inerte, pendant le temps nécessaire à la formation au moins partielle dudit produit de réaction, qui peut durer entre 5 minutes et 24 heures et s'accompagne le plus souvent d'un dégagement gazeux qui permet d'en apprécier l'avancement.

Parmi tous les halogénures organoaluminiques (A) définis et énumérés ci-dessus, les meilleurs résultats sont obtenus avec les chlorures d'alkylaluminium (A), en particulier avec les chlorures d'éthylaluminium, présentant un rapport atomique chlore/aluminium supérieur à 1,005, de préférence supérieur à 1,01 et plus particulièrement supérieur à 1,015 et inférieur à 1,1, de préférence inférieur à 1,08, plus particulièrement inférieur à 1,06. Ces chlorures peuvent être obtenus par mélanges dans des proportions appropriées de mono- et de dichlorure d'alkylaluminiums ou de trialkylaluminium et de dichlorure d'alkylaluminium, les radicaux alkyle de ces composés étant de préférence identiques, typiquement le radical éthyle.

Le composé organique électrodonneur particulier (ED) utilisable pour préparer la composition cocatalytique selon l'invention est choisi parmi les esters, les amides et les cétones. Les esters et les amides peuvent être des esters et amides d'acides mono- et poly-carboxyliques, notamment les esters et amides d'acides carboxyliques aliphatiques, les esters et amides d'acides carboxyliques oléfiniques, les esters et amides d'acides carboxyliques alicycliques, et les esters et amides d'acides carboxyliques aromatiques. Les esters de l'acide 3-(3',5'-di-tert-butyl-4'-hydroxyphényl) propionique, mentionnés plus haut, conviennent également. Les amides peuvent être mono- ou disubstitués sur l'atome d'azote, notamment par des radicaux alkyle et phényle.

A titre d'esters utilisables, on peut citer : l'acétate de méthyle, l'acétate d'éthyle, l'acétate de phényle, le chloroacétate d'éthyle, le propionate de méthyle, le butyrate d'éthyle, le valérate d'éthyle, l'acrylate de méthyle, l'acrylate d'éthyle, le méthacrylate de méthyle, le benzoate d'éthyle, le benzoate de butyle, le toluate de méthyle, le toluate d'éthyle, l'anisate d'éthyle, le succinate de diéthyle, le succinate de dibutyle, le malonate de diéthyle, le malonate de dibutyle, le maléate de diméthyle, le maléate de dibutyle, l'itaconate de diéthyle, l'itaconate de dibutyle, le phtalate de monoéthyle, le phtalate de diméthyle, le phtalate d'éthylméthyle, le phtalate de diéthyle, le phtalate de di-n-propyle, le phtalate de diisobutyle, le phtalate de di-n-hexyle, le phtalate de di-n-octyle et le phtalate de diphényle.

A titre d'amides utilisables, on peut citer : le formamide, l'acétamide, le propionamide, le n-butyramide, le n-valéramide, le n-caproamide, le lauramide, le stéaramide, le diméthylformamide, le N-méthylacétamide, le N,N-diméthylacétamide, le chloroacétamide, l'acrylamide, le méthacrylamide, le $\beta,\beta$-diméthylacrylamide, l'adipamide, le benzamide, le phtalamide, le N,N-diméthylbenzamide, le benzanilide et le N,N-diphénylbenzamide.

A titre de cétones utilisables, on peut citer : l'acétone, la méthyléthylcétone, la méthylisobutylcétone, l'acétylacétone, la propiophénone, l'acétophénone et la benzophénone.

De très bons résultats sont obtenus avec les esters d'acides carboxyliques aromatiques, tels que les benzoates, les toluates et les phtalates. Les amides dérivés d'acides carboxyliques aromatiques, tels que les benzamide et phtalamide substitués ou non conviennent bien également. De manière avantageuse, on utilise des donneurs d'électrons liquides à la température ordinaire. Les esters d'acides carboxyliques aromatiques liquides conviennent bien. De préférence on utilise un ester d'acide carboxylique aromatique soluble dans les alkylaluminiums. Le benzoate d'éthyle est tout particulièrement préféré à titre de composé électrodonneur (ED).

Il va de soi que, pour la préparation de la composition cocatalytique selon l'invention, il n'est nullement exclu d'utiliser plusieurs halogénures organoaluminiques (A) et plusieurs composés électrodonneurs (ED).

Les conditions générales de formation de la composition cocatalytique selon l'invention ne sont pas critiques pour autant qu'elles conduisent à un produit final contenant un large excès, tel que défini ci-après, de l'halogénure (A) par rapport au composé (ED).

En général, on opère la mise en contact entre eux de l'halogénure (A) et du composé (ED) en phase liquide. La composition cocatalytique de l'invention étant constituée essentiellement du produit résultant de la mise en contact de l'halogénure (A) et du composé (ED), cette mise en contact est effectuée dans des conditions non polymérisantes, c'est-à-dire en l'absence d'alpha-oléfine polymérisable et/ou de solide catalytique contenant un halogénure du titane.

On peut opérer cette mise en contact en présence d'un diluant inerte. Dans ce cas, on choisit un diluant dans lequel au moins un des composés impliqués est soluble. Lorsqu' on utilise un diluant, on préfère que la concentration totale des composés dissous soit supérieure ou égale à 5 % en poids, particulièrement qu'elle soit comprise entre 5 et 20 % en poids. Ce diluant est généralement choisi parmi les hydrocarbures aliphatiques, cycloaliphatiques et aromatiques liquides, tels que les alkanes, isoalkanes et cycloalkanes liquides et le benzène.

L'halogénure (A) et le composé (ED) qui ont la préférence selon l'invention sont solubles dans ces diluants.

On peut aussi opérer la mise en contact entre eux de l'halogénure (A) et du composé (ED), et ceci constitue un mode de réalisation préférentiel de l'invention, en l'absence de diluant, en choisissant des conditions de température et de pression telles que l'un au moins des composés impliqués soit à l'état liquide. L'halogénure (A) et le composé (ED) sont souvent liquides et/ou chacun d'entre eux souvent capable de dissoudre l'autre dans des conditions normales de température et de pression. Dans ces mêmes conditions, la composition cocatalytique obtenue se présente elle-même également souvent sous la forme liquide. De préférence, cette composition cocatalytique se présente sous la forme d'un liquide homogène. Cette forme est avantageuse dans la mesure où elle permet le stockage, le transport et la manipulation aisée des compositions cocatalytiques sous de faibles volumes. Elle est aussi avantageuse dans le cadre de l'utilisation de ces compositions dans des procédés de polymérisation effectués sans diluant, en particulier dans les procédés de polymérisation du propylène effectués dans le monomère maintenu à l'état liquide ou en phase gazeuse.

Pour ce qui concerne le mode de mise en contact pour former la composition cocatalytique selon l'invention de l'halogénure (A) et du composé (ED), il convient de tenir compte de ce qui a été mentionné plus haut, à savoir que l'halogénure (A) n'est pas un composé défini pur mais résulte du mélange de composés organoaluminiques dans des proportions choisies pour conduire à un rapport atomique (X)/(Al) supérieur à 1 et inférieur à 1,3 et pour que leur composition brute corresponde à la formule (I). Si l'on dénomme dès lors (AA) un composé organoaluminique moins halogéné ou non halogéné et (AB) un composé organoaluminique plus halogéné utilisés pour préparer l'halogénure (A), on peut :

- mettre le composé (ED) en contact avec l'halogénure (A) préformé par mélange préalable, en quantités convenables, des composés (AA) et (AB);

- lorsque le composé (AB) est présent en excès par rapport aux deux autres, y introduire, successivement et en quantités convenables, le composé (AA) pour la formation "in situ" de l'halogénure (A), puis le composé (ED); ou y introduire, successivement et en quantités convenables, le composé (ED), puis le composé (AA).

Le premier mode de formation de la composition cocatalytique défini ci-dessus a la préférence.

Les composés impliqués dans la formation de la composition cocatalytique selon l'invention sont mis en contact entre eux à des températures généralement comprises entre environ 0 et 90°C, de préférence à une température voisine de la température ambiante (25°C).

La mise en oeuvre de l'halogénure (A) et du composé (ED) pour préparer la composition cocatalytique selon l'invention s'effectue dans le rapport molaire halogénure (A)/composé (ED) élevé mentionné plus haut.

Ce rapport molaire entre l'halogénure (A) et le composé (ED) est supérieur à 20, de préférence supérieur à 30. Ce rapport molaire est avantageusement supérieur à 35 et le plus souvent supérieur à 50, les meilleurs résultats étant obtenus lorsqu'il est d'au moins 52. En général le rapport molaire (A)/(ED) ne dépasse pas environ 150 et souvent il ne dépasse pas environ 90. Le plus souvent, le rapport molaire (A)/(ED) ne dépasse pas 75.

Les rapports molaires (A)/(ED) peuvent ainsi être en général compris entre 35 et 150 et souvent entre 40 et 90. Lorsque halogénure (A) et le composé (ED) sont mis en oeuvre sous forme de liquides non dilués pour obtenir une composition cocatalytique liquide, ces rapports molaires sont souvent supérieurs à 50 et de préférence d'au moins 52 sans dépasser 90, tout particulièrement compris entre 52 et 75. Les compositions cocatalytiques qui confèrent le meilleur compromis productivité/stéréosélectivité sont obtenues en ajoutant à un chlorure d'alkylaluminium de rapport atomique (Cl)/(Al) compris entre 1,01 et 1,06 un ester d'acide carboxylique aromatique liquide et plus particulièrement du benzoate d'éthyle dans des proportions telles que le rapport molaire halogénure (A)/composé (ED) soit compris entre 52 et 75.

La préparation de la composition cocatalytique selon l'invention peut avantageusement s'achever par son maintien, à température ambiante (25°C environ), pendant une durée d'au moins 30 minutes (phase de mûrissage) lorsqu'elle est destinée à être mise en contact, dès la fin de sa préparation, avec un constituant solide contenant un halogénure du titane. La phase de mûrissage est avantageusement d'au moins environ 1 heure à température ambiante. La composition cocatalytique ainsi obtenue présente une composition chimique complexe et variable au cours du temps qui résulte des réactions de complexation entre les différents constituants et de la dégradation de ces complexes. Malgré ces différentes réactions la composition cocatalytique de l'invention peut être stockée sans perdre de ses propriétés catalytiques.

Ainsi, elle peut être stockée pendant plusieurs mois, jusqu'à des températures de l'ordre de 50°C, sans que ses propriétés catalytiques soient substantiellement modifiées.

Les compositions cocatalytiques décrites ci-dessus peuvent être utilisées - et ceci constitue un second aspect de l'invention - en association avec des solides contenant un halogénure du titane pour former des systèmes catalytiques utilisables pour polymériser les alpha-oléfines.

L'halogénure de titane contenu dans ces solides peut en être le constituant principal ou peut ne représenter qu'une partie, même mineure, de la composition chimique totale de ces solides. Cet halogénure de titane est de préférence un chlorure, en particulier le tétra- ou le trichlorure.

Des exemples de solides dont l'halogénure de titane n'entre que pour une partie mineure dans la composition chimique sont les catalyseurs dits "supportés". Le support de l'halogénure est généralement de nature inorganique. Il s'agit fréquemment d'halogénures de magnésium, en particulier de chlorures de magnésium dont le spectre de diffraction des rayons X diffère du spectre normal de ce composé.

Tant le support que l'halogénure de titane peuvent être associés à ou contenir des composés électrodonneurs, en particulier des esters.

Des exemples de solides dont l'halogénure de titane est le constituant principal sont les solides dont plus de 50 % du poids total et souvent plus de 60 % du poids total sont constitués d'halogénure solide du titane. De préférence, cet halogénure est le trichlorure de titane, tout particulièrement le trichlorure de titane complexé par un composé électrodonneur. Ces solides sont préférés à titre de constituants des systèmes catalytiques selon l'invention.

Ces solides peuvent être obtenus par n'importe quel procédé connu.

On préfère généralement utiliser un solide obtenu par un procédé impliquant une réduction initiale d'un composé du titane choisi parmi les tétrahalogénures, les tétrahydrocarbyloxydes et leurs mélanges. A titre d'exemples de tétrahalogénures de titane, on peut citer les tétraiodure, tétrabromure et tétrachlorure. A titre d'exemples de tétrahydrocarbyloxydes de titane, on peut citer les tétraalkoxydes tels que les tétraméthoxy-, tétraisopropoxy- et tétra-n-butoxytitanes; les tétraaryloxydes, tels que les tétraphénoxy-, tétracrésoxy- et tétranaphtoxytitanes par exemple.

Parmi les composés du titane mentionnés ci-dessus, on préfère les tétrahalogénures de titane et, parmi ces derniers, le tétrachlorure de titane.

La réduction peut être opérée à l'intervention d'hydrogène ou de métaux tels que le magnésium et, de préférence, l'aluminium, en particulier lorsque le composé du titane est un tétrahalogénure de titane. On préfère toutefois effectuer la réduction du composé du titane à l'intervention d'un réducteur organométallique, qui peut être par exemple un réducteur organomagnésien.

Les meilleurs résultats sont obtenus lorsque l'on opère la réduction du composé du titane à l'intervention de réducteurs organoaluminiques.

Les réducteurs organoaluminiques utilisables de préférence sont les composés qui contiennent au moins un radical hydrocarboné fixé directement sur l'atome d'aluminium. Des exemples de composés de ce type sont les mono-, di- et trialkylaluminiums dont les radicaux alkyles contiennent de 1 à 12, et de préférence de 1 à 6 atomes de carbone, tels le triéthylaluminium, les isoprénylaluminiums, l'hydrure de diisobutylaluminium et l'éthoxydiéthylaluminium. Avec les composés de ce type, les meilleurs résultats sont obtenus avec les chlorures d'alkylaluminium, en particulier avec le chlorure de diéthylaluminium et avec le sesquichlorure d'éthylaluminium.

Pour obtenir les constituants solides des systèmes catalytiques utilisables selon l'invention, on soumet les solides réduits mentionnés ci-dessus à un traitement au moyen d'au moins un agent complexant qui est choisi en général parmi les composés organiques comprenant un ou plusieurs atomes ou groupements présentant une ou plusieurs paires d'électrons libres susceptibles d'assurer la coordination avec les atomes de titane ou d'aluminium présents dans les composés du titane ou d'aluminium définis ci-dessus. De préférence, l'agent complexant est choisi dans la famille des éthers aliphatiques, et plus particulièrement parmi ceux dont les radicaux aliphatiques comprennent de 2 à 8 atomes de carbone, de préférence 4 à 6 atomes de carbone. Un exemple typique d'éther aliphatique donnant de très bons résultats est l'éther diisoamylique.

Ces traitements au moyen d'agents complexants, propres à stabiliser ou à améliorer la productivité et/ou la stéréospécificité des solides catalytiques sont bien connus et ont été amplement décrits dans la littérature.

Ainsi, le traitement au moyen de l'agent complexant peut consister en un broyage du solide réduit en présence de l'agent complexant. Il peut consister en un traitement thermique du solide réduit en présence de l'agent complexant. Il peut aussi consister en des lavages extractifs du solide réduit, en présence de solvants mixtes comprenant un composé hydrocarboné liquide et un solvant auxiliaire polaire, par exemple un éther. On peut aussi effectuer la réduction du composé de titane, en particulier du tétrachlorure, avec le réducteur organoaluminique, en présence de l'agent complexant, par exemple en ajoutant au tétrachlorure de titane une solution hydrocarbonée du produit de la réaction de l'agent complexant avec ce réducteur, et soumettre ensuite le solide réduit ainsi obtenu à un traitement thermique en l'absence d'agent complexant ou en présence d'une nouvelle quantité d'agent complexant, identique ou différent du précédent. On peut aussi effectuer le traitement au moyen de l'agent complexant avec une quantité de ce dernier suffisante pour former une solution homogène de solide à base de trichlorure de titane et reprécipiter par chauffage le solide ainsi dissous.

Pour la préparation du constituant solide des systèmes catalytiques selon l'invention, le traitement au moyen de l'agent complexant peut être combiné avec ou suivi d'un traitement d'activation. Ces traitements d'activation sont également bien connus et ont également été décrits dans la littérature. Ils sont effectués en général au moyen d'au moins un agent choisi parmi les composés halogénés inorganiques, les composés halogénés organiques, les composés interhalogénés et les halogènes. Parmi ces agents, on peut citer :

-   à titre de composés halogénés inorganiques, les halogénures de métaux et de non métaux, tels que les halogénures de titane et de silicium par exemple;
-   à titre de composés halogénés organiques, les hydrocarbures halogénés tels que les alkanes halogénés et les tétrahalogénures de carbone par exemple;
-   à titre de composés interhalogénés, les chlorure et bromure d'iode par exemple;
-   à titre d'halogène, le chlore, le brome et l'iode.

Des exemples d'agents convenant très bien pour le traitement d'activation sont le tétrachlorure de titane, le tétrachlorure de silicium, l'iodobutane, le monochloréthane, l'hexachloréthane, le chlorméthylbenzène, le tétrachlorure de carbone, le chlorure d'iode et l'iode. Les meilleurs résultats ont été obtenus avec le tétrachlorure de titane.

La forme physique sous laquelle se trouvent les agents complexants et les agents utilisés pour l'éventuel traitement d'activation n'est pas critique pour la préparation du précurseur. Ces agents peuvent être mis en oeuvre sous forme gazeuse, ou sous forme liquide, cette dernière étant la forme la plus usuelle sous laquelle ils se présentent dans les conditions habituelles de température et de pression. On peut aussi effectuer le traitement au moyen de l'agent complexant et l'éventuel traitement d'activation en présence d'un diluant hydrocarboné inerte, tel que ceux définis plus haut en rapport avec la préparation de la composition cocatalytique, généralement choisi parmi les hydrocarbures aliphatiques, cycloaliphatiques et aromatiques liquides, tels que les alkanes et isoalkanes liquides et le benzène.

Des détails relatifs aux conditions opératoires des traitements de complexation et d'activation les plus courants peuvent être trouvés notamment dans les brevets BE-A-780758 (SOLVAY & Cie), BE-A-864708 (SUMITOMO CHEMICAL COMPANY LTD), US-A-4368304 (CHISSO CORPORATION) et US-A-4295991 (EXXON RESEARCH AND ENGINEERING CO) ainsi que dans les documents cités dans ce dernier.

A un moment quelconque de sa préparation, après l'étape de réduction ou de complexation, ou après l'éventuelle étape d'activation, mais de préférence après l'étape de réduction, le constituant solide du système catalytique peut être soumis à un traitement visant à diminuer la friabilité de ses particules constitutives. Ce traitement, appelé "prépolymérisation", consiste à mettre le solide en contact avec une alpha-monooléfine inférieure, telle que l'éthylène ou, mieux, le propylène, dans des conditions polymérisantes de manière à obtenir un solide contenant en général entre 5 et 500 % en poids environ d'alphamonooléfine "prépolymérisée" par rapport au poids d'halogénure de titane qu'il contient. Cette "prépolymérisation" peut s'effectuer avantageusement au sein d'une suspension du solide dans le diluant hydrocarboné inerte tel que défini plus haut pendant une durée suffisante pour obtenir la quantité souhaitée d'alpha-monooléfine prépolymérisée sur le solide. Le constituant solide obtenu selon cette variante est moins friable et permet d'obtenir des polymères de bonne morphologie même lorsqu'on polymérise à température relativement élevée.

En outre, à un moment quelconque de sa préparation, mais de préférence après l'étape d'activation quand on procède à cette dernière, le constituant solide peut être soumis à un traitement d'activation supplémentaire visant à maintenir la stabilité de ses propriétés et/ou visant à augmenter sa stéréospécificité. Ce traitement d'activation supplémentaire consiste à mettre le constituant solide, de préférence séparé du milieu dans lequel il a été préparé et lavé par un diluant hydrocarboné inerte tel que défini plus haut, en contact avec un agent d'activation choisi parmi les composés organoaluminiques et les produits de la réaction d'un composé organoaluminique avec un composé choisi parmi les composés hydroxyaromatiques dont le groupe hydroxyle est stériquement bloqué. Le composé organoaluminique est choisi de préférence parmi les trialkylaluminiums et les chlorures d'alkylaluminium. Parmi ces composés, les meilleurs résultats ont été obtenus avec le chlorure de diéthylaluminium. Le composé hydroxyaromatique répond aux mêmes définitions et limitations que celles énoncées plus haut en rapport avec la nature de l'halogénure (A).

On trouvera d'autres détails en rapport avec le traitement d'activation supplémentaire défini ci-dessus, notamment en rapport avec la nature des composés organoaluminiques et hydroxyaromatiques, avec les conditions opératoires dans lesquelles on effectue ce traitement et avec la texture du solide préactivé obtenu, dans les brevets BE-A-803875 (SOLVAY & Cie) et FR-A-2604439 (SOLVAY & Cie) dont le contenu est incorporé par référence dans la présente description.

Une méthode de préparation préférée du solide entrant dans la composition du système catalytique utilisable selon l'invention a été décrite dans le brevet BE-A-780758 (SOLVAY & Cie).

Cette méthode comprend la réduction du tétrachlorure de titane au moyen d'un réducteur organoaluminique qui, en l'occurrence, est de préférence un chlorure de dialkylaluminium dont les chaînes alkyles comprennent de 2 à 6 atomes de carbone, dans des conditions douces. Après un éventuel traitement thermique du solide réduit ainsi obtenu, on soumet ce dernier à un traitement au moyen d'un agent complexant tel que défini plus haut. Enfin, on opère un traitement au moyen de tétrachlorure de titane et on sépare le solide à base de trichlorure de titane complexé ainsi formé que l'on lave généralement au moyen d'un diluant hydrocarboné inerte tel que défini plus haut, choisi de préférence parmi les hydrocarbures aliphatiques liquides comprenant de 3 à 12 atomes de carbone et qui est d'ailleurs le diluant qui peut être utilisé tout au long de la préparation dudit solide.

La méthode de préparation préférée définie dans le paragraphe précédent conduit à des particules de solide à base de trichlorure de titane complexé qui sont également décrites dans le brevet BE-A-780758. Ces particules sont sphériques et ont en général un diamètre compris entre 5 et 100 microns et le plus souvent entre 10 et 50 microns. Elles sont constituées d'un aggloméré de microparticules également sphériques qui ont un diamètre compris entre 0,05 et 1 micron, le plus souvent entre 0,1 et 0,3 micron et qui sont extrêmement poreuses. Il en résulte que les particules présentent une surface spécifique supérieure à 75 m$^2$/g et se situant le plus souvent entre 100 et 250 m$^2$/g et une porosité totale supérieure à 0,15 cm$^3$/g et comprise la plupart du temps entre 0,20 et 0,35 cm$^3$/g. La porosité interne des microparticules constitue la contribution la plus importante à cette porosité totale des particules, comme l'atteste la valeur élevée du volume poreux correspondant aux pores de moins de 200 Å de diamètre, qui est supérieur à 0,11 cm$^3$/g et la plupart du temps compris entre 0,16 et 0,31 cm$^3$/g.

Les solides à base de trichlorure de titane complexé (constituant (a)) obtenus selon la méthode de préparation décrite dans le brevet BE-A-780758 en choisissant les conditions opératoires préférées répondent à la formule :

$$TiCl_3 \cdot (AlRCl_2)_x \cdot C_y$$

où R est un radical alkyle comprenant de 2 à 6 atomes de carbone, C est un agent complexant tel que défini plus haut, x est un nombre quelconque inférieur à 0,20 et y un nombre quelconque supérieur à 0,009 et en général inférieur à 0,20.

A titre de variantes de cette méthode de préparation, on peut citer celles, mentionnées plus haut, consistant :

- à "prépolymériser" le solide réduit, après l'éventuel traitement thermique et avant le traitement au moyen de l'agent complexant, avec une alpha-monooléfine inférieure (propylène) dans des conditions polymérisantes. Cette "prépolymérisation" s'effectue au sein d'une suspension du solide réduit dans le diluant hydrocarboné inerte tel que défini plus haut, entre 20 et 80°C environ, pendant une durée comprise généralement entre 1 minute et 1 heure;
- à procéder à un traitement d'activation supplémentaire du solide par introduction d'une solution du produit de la réaction du composé organoaluminique et du composé hydroxyaromatique dans une suspension hydrocarbonée du constituant (a) maintenue ensuite à une température comprise de préférence entre 20 et 40°C environ pour une durée comprise de préférence entre 15 et 90 minutes.

Ces variantes peuvent être mises en oeuvre isolément ou en combinaison.

Quelle que soit la (ou les) variante(s) retenue(s) pour la préparation du constituant solide du système catalytique et comme mentionné plus haut, ce dernier est finalement séparé de son milieu de formation et généralement lavé ensuite au moyen d'un diluant hydrocarboné inerte de même nature que ceux à l'intervention desquels il a éventuellement été préparé.

Le constituant solide du système catalytique utilisable selon l'invention, séparé et lavé, peut être ensuite éventuellement séché de manière conventionnelle, par exemple selon la méthode décrite dans le brevet BE-A-846911 (SOLVAY & Cie).

Après avoir été lavé et éventuellement séché, le constituant solide du système catalytique selon l'invention peut être immédiatement remis en contact avec un diluant hydrocarboné inerte tel que ceux qui ont été définis plus haut et qui sont aussi utilisables comme diluants dans la polymérisation en suspension. Il peut être stocké dans un tel diluant ou sous forme sèche, de préférence à froid, pendant des périodes longues, sans perdre ses qualités. Il peut aussi être stocké sous forme d'une suspension dans une huile minérale ou une huile de silicone.

L'invention concerne aussi un procédé pour la polymérisation des alpha-oléfines effectué en présence des systèmes catalytiques décrits ci-dessus. Pour ce faire, la composition cocatalytique et le constituant solide contenant un halogénure de titane peuvent être mis en contact entre eux avant de les introduire dans le milieu de polymérisation ou être ajoutés séparément à ce milieu.

Le précontact, lorsqu' il est effectué, l'est généralement à une température comprise entre -40 et 80°C, pendant une durée qui est dépendante de cette température et qui peut aller de quelques secondes à plusieurs heures, voire plusieurs jours.

Les systèmes catalytiques comprenant le constituant solide et la composition cocatalytique définis et associés comme décrit ci-dessus, s'appliquent à la polymérisation des oléfines à insaturation terminale dont la molécule contient de 2 à 18 et de préférence de 2 à 6 atomes de carbone telles que l'éthylène, le propylène, le butène-1, le pentène-1, le méthylbutène-1, l'hexène-1, les 3- et 4-méthylpentènes-1 et le vinylcyclohexène. Ils sont particulièrement intéressants pour la polymérisation stéréospécifique du propylène, du butène-1 et du 4-méthylpentène-1 en polymères cristallins, fortement isotactiques.

Ils s'appliquent également à la copolymérisation de ces alpha-oléfines entre elles ainsi qu'avec des dioléfines comprenant de 4 à 18 atomes de carbone. De préférence, les dioléfines sont des dioléfines aliphatiques non conjuguées telles que l'hexadiène-1,4, des dioléfines monocycliques non conjuguées telles que le 4-vinylcyclohexène, des dioléfines alicycliques ayant un pont endocyclique telles que le dicyclopentadiène, le méthylène- et l'éthylidènenorbornène et des dioléfines aliphatiques conjuguées telles que le butadiène ou l'isopropène.

Ils s'appliquent encore à la fabrication de copolymères appelés à blocs qui sont constitués à partir d'alpha-oléfines et de dioléfines. Ces copolymères à blocs consistent en des successions de segments de chaîne à longueurs variables; chaque segment consiste en un homopolymère d'une alpha-oléfine ou en un copolymère statistique comprenant une alpha-oléfine et au moins un comonomère choisi parmi les alpha-oléfines et les dioléfines. Les alpha-oléfines et les dioléfines sont choisies parmi celles mentionnées ci-dessus.

Les systèmes catalytiques selon l'invention conviennent particulièrement bien pour la fabrication d'homopolymères du propylène et de copolymères contenant au total au moins 50 % en poids de propylène et de préférence 75 % en poids de propylène.

La polymérisation peut être effectuée selon n'importe quel procédé connu : en solution ou en suspension dans un solvant ou un diluant hydrocarboné inerte, tel que ceux définis en rapport avec la préparation de la composition cocatalytique et qui est de préférence choisi parmi le butane, le pentane, l'hexane, l'heptane, le cyclohexane, le méthylcyclohexane ou leurs mélanges. Dans ces procédés, on peut indifféremment utiliser la composition cocatalytique sous forme d'une solution dans le même diluant ou l'introduire sous forme pure dans le milieu de polymérisation. On peut également opérer la polymérisation dans le monomère ou un des monomères maintenu à l'état liquide ou encore en phase gazeuse. Dans ce cas, on préfère utiliser la composition cocatalytique sous forme pure (sans diluant).

La température de polymérisation est choisie généralement entre 20 et 200°C et de préférence entre 50 et 90°C, les meilleurs résultats étant obtenus entre 65 et 85°C. La pression est choisie généralement entre la pression atmosphérique et 80 atmosphères et de préférence entre 10 et 50 atmosphères. Cette pression est bien entendu fonction de la température utilisée.

La polymérisation peut être effectuée en continu ou en discontinu.

La préparation des copolymères dits à blocs peut se faire également selon des procédés connus. On préfère utiliser un procédé en deux étapes consistant à polymériser une alpha-oléfine, généralement le propylène, selon la méthode décrite précédemment pour l'homopolymérisation. Ensuite, on polymérise l'autre alpha-oléfine et/ou dioléfine, généralement l'éthylène, en présence de la chaîne homopolymère encore active. Cette seconde polymérisation peut se faire après avoir enlevé complètement ou partiellement le monomère n'ayant pas réagi au cours de la première étape.

La quantité de constituant solide mise en oeuvre est déterminée en fonction de sa teneur en $TiCl_3$. Elle est choisie en général de manière que la concentration du milieu de polymérisation soit supérieure à 0,01 mmole de $TiCl_3$ par litre de diluant, de monomère liquide ou de volume de réacteur et de préférence supérieure à 0,05 mmole par litre.

La quantité totale de composition cocatalytique mise en oeuvre n'est pas critique; exprimée par rapport à l'halogénure organoaluminique (A) qu'elle contient, cette quantité est en général supérieure à 0,1 mmole par litre de diluant, de monomère liquide, ou de volume de réacteur, de préférence supérieure à 0,5 mmole par litre.

Le rapport des quantités de constituant solide et de composition cocatalytique n'est pas critique non plus. On choisit généralement ces quantités de manière que le rapport molaire entre la quantité d'halogénure organoaluminique (A) présente dans la composition et la quantité de trichlorure de titane présente dans le constituant solide soit compris entre 1 et 30 mole/mole et de préférence entre 5 et 25 mole/mole. Dans ces conditions, et compte tenu de la quantité relativement très faible de composé (ED) que peut contenir la composition cocatalytique (voir plus haut), le rapport molaire entre ce composé (ED) et le trichlorure de titane dans le système catalytique peut être maintenu à des valeurs très faibles également, avantageusement inférieures à l'unité et de préférence comprises entre 0,1 et 0,5, ce qui évite tout effet secondaire indésirable sur les propriétés catalytiques.

Le poids moléculaire des polymères fabriqués selon le procédé de l'invention peut être réglé par l'addition au milieu de polymérisation d'un ou plusieurs agents de réglage du poids moléculaire comme l'hydrogène, le diéthylzinc, les alcools, les éthers et les halogénures d'alkyle.

Les exemples suivants servent à illustrer l'invention.

La signification des symboles utilisés dans ces exemples, les unités exprimant les grandeurs mentionnées et les méthodes de mesure de ces grandeurs sont explicitées ci-dessous.

$\alpha =$      activité catalytique exprimée conventionnellement en grammes de polymère insoluble dans le milieu de polymérisation, obtenus par heure et par gramme de $TiCl_3$ contenu dans le solide catalytique préactivé. Cette activité est appréciée indirectement à partir de la détermination de la teneur résiduaire en titane du polymère par fluorescence X.

fti =      fraction molaire de triades isotactiques (enchaînement séquencé de trois unités monomériques de propylène en configuration méso) du polymère total. Cette fraction est déterminée par RMN $^{13}$C comme décrit dans Macromolecules, volume 6, no. 6, page 925 (1973) et dans les références (3) à (9) de cette publication.

I.I =      indice d'isotacticité du polymère, apprécié par la fraction de ce dernier, exprimée en % par rapport à la quantité totale de polymère solide recueilli, qui est insoluble dans l'heptane bouillant.

G =      module de rigidité en torsion du polymère, mesuré à 100°C et pour un angle de torsion de 60° d'arc, la température du moule étant fixée à 70°C et la durée de conditionnement à 5 minutes (normes BS 2782 - part I - method 150A; ISO 458/1, méthode B; DIN 53447 et ASTM D 1043). Ce module est exprimé en $daN/cm^2$.

MFI =      indice de fluidité en fondu mesuré sous une charge de 2,16 kg à 230°C et exprimé en g/10 min (norme ASTM D 1238).

PSA =     poids spécifique apparent de la fraction du polymère insoluble, mesuré par tassement et exprimé en g/l.

<u>Exemples 1 et 2 et exemples 3R à 5R</u>

(Les exemples 3R à 5R sont donnés à titre de comparaison)

A. <u>Préparation du constituant solide à base de trichlorure de titane complexé</u>

1. <u>Réduction</u>

Dans un réacteur de 800 ml équipé d'un agitateur à 2 pales tournant à 400 tours/min., on introduit sous atmosphère d'azote 90 ml d'hexane sec et 60 ml de $TiCl_4$ pur. Cette solution hexane-$TiCl_4$ est refroidie à 0 ($\pm$ 1)°C. Endéans 4 h on y additionne une solution constituée de 190 ml d'hexane et de 70 ml de chlorure de diéthylaluminium (DEAC) en maintenant la température de 0 ($\pm$ 1)°C dans le réacteur.

Après addition de la solution DEAC-hexane, le milieu de réaction constitué par une suspension de fines particules est maintenu sous agitation à 0 ($\pm$ 1)°C pendant 15 min., puis est porté en 1 h à 25°C et maintenu 1 h à cette température et ensuite porté en 1 h environ à 65°C. Le milieu est maintenu sous agitation pendant 2 h à 65°C.

2. <u>Prépolymérisation</u>

La suspension obtenue est ensuite refroidie à environ 55°C. On introduit alors, dans le ciel gazeux du réacteur, du propylène sous une pression de 2 bars. Cette introduction est poursuivie pendant le temps suffisant (environ 45 minutes) pour obtenir, par kg de solide, 70 g de propylène polymérisé. La suspension du solide ainsi "prépolymérisé" est ensuite refroidie à 40°C.

La phase liquide est alors séparée du solide et le produit solide est lavé 7 fois au moyen de 200 ml d'hexane sec, avec remise en suspension du solide lors de chaque lavage.

3. <u>Traitement avec l'agent complexant</u>

Le solide réduit "prépolymérisé" obtenu est mis en suspension dans 456 ml de diluant (hexane) et on y ajoute 86 ml d'éther di-isoamylique (EDIA). La suspension est agitée pendant 1 h à 50°C. Ensuite, le solide ainsi traité est séparé de la phase liquide.

4. <u>Traitement avec $TiCl_4$</u>

Le solide traité est remis en suspension dans 210 ml d'hexane et on y ajoute 52 ml de $TiCl_4$; la suspension est maintenue sous agitation (150 tours/min.) à 70°C pendant 2 h. La phase liquide est ensuite éliminée par filtration et le solide (précurseur) à base de trichlorure de titane complexé est lavé 14 fois avec 270 ml d'hexane.

5. <u>Préactivation</u>

Dans un réacteur de 800 ml équipé d'un agitateur à pales tournant à 150 tours/min., on introduit 74 g du précurseur solide (contenant environ 780 g de $TiCl_3$/kg) suspendu dans 280 ml d'hexane. On introduit lentement (30 minutes) dans ce réacteur 120 ml d'une solution dans l'hexane d'un préactivateur préalablement préparé en mélangeant, par litre d'hexane, 80 g de DEAC (composé (D)) et 176,2 g de 3-(3',5'-di-tert-butyl-4'-hydroxyphényl)propionate de n-octadécyle commercialisé sous la dénomination Irganox 1076 par CIBA-GEIGY (composé (I)). Le rapport molaire entre les composés (D) et (I) mis en oeuvre pour préparer le préactivateur est donc de 2, et le rapport molaire entre le préactivateur et le précurseur (exprimé en mole de composé (D) initialement mis en oeuvre par mole de $TiCl_3$ présent dans le précurseur) vaut 0,2.

La solution de préactivateur n'est introduite dans le réacteur que 15 minutes après le terme du dégagement gazeux observé au cours du mélange du composé (D) et du composé (I).

La suspension ainsi additionnée du préactivateur est maintenue pendant 1 heure à 30°C sous agitation.

Après décantation, le solide catalytique résultant est lavé 5 fois au moyen de 100 ml d'hexane sec, avec remise en suspension du solide lors de chaque lavage, puis séché par balayage d'azote en lit fluidisé à 50°C.

Le solide catalytique ainsi obtenu contient, par kg, 616 g de $TiCl_3$.

B. <u>Polymérisation du propylène en suspension dans le monomère liquide</u>

1. <u>Préparation des compositions cocatalytiques</u>

Pour la réalisation des exemples 1 et 2, on ajoute, à du chlorure de diéthylaluminium (DEAC) liquide pur, du dichlorure d'éthylaluminium (EADC) liquide pur pour obtenir un chlorure d'éthylaluminium (halogénure organoaluminique (A)) présentant un rapport atomique (Cl)/(Al) valant 1,05 (exemple 1) et 1,02 (exemple 2).

On ajoute, à ce chlorure d'éthylaluminium ainsi préformé, du benzoate d'éthyle (BE) de manière que le rapport molaire du chlorure d'éthylaluminium au BE soit égal à 60 (exemple 1) et 57 (exemple 2).

Les compositions cocatalytiques ainsi obtenues sont maintenues 1 heure à 25°C avant d'être utilisées en polymérisation.

Pour la réalisation des exemples 3R à 5R (comparatifs) on procède comme ci-dessus, sauf que lors de la préparation des compositions cocatalytiques :

- on ajoute le BE au chlorure d'éthylaluminium de l'exemple 2 de manière que le rapport molaire du chlorure d'éthylaluminium au BE soit égal à 20 seulement (exemple 3R);
- on ajoute le BE au DEAC liquide pur (rapport atomique Cl/Al = 1,00) de manière à ce que le rapport molaire du chlorure d'éthylaluminium au BE soit égal à 57 (exemple 4R) ;
- on ajoute du triéthylaluminium au DEAC liquide pur pour obtenir un chlorure d'éthylaluminium présentant un rapport atomique Cl/Al valant 0,95 (rapport molaire du chlorure d'éthylaluminium au BE = 57)(exemple 5R).

2. Polymérisation - Conditions de référence

Dans un autoclave de 5 l, préalablement séché et maintenu sous atmosphère d'azote sec, on introduit, sous balayage d'azote :

- 100 mg de solide catalytique ;
- un volume de composition cocatalytique tel que le rapport atomique de l'aluminium qu'elle contient au titane contenu dans le solide catalytique vaut approximativement 15;
- de l'hydrogène sous pression partielle de 1 bar;
- 3 l de propylène liquide.

On maintient le réacteur à 70°C sous agitation pendant 3 heures. Ensuite, on dégaze le propylène excédentaire et on récupère le polypropylène (PP) formé.

Les résultats des essais de polymérisation sont rassemblés au tableau I ci-après.

Tableau I

| Exemples | 1 | 2 | 3R | 4R | 5R(1) |
|---|---|---|---|---|---|
| $\alpha$ | 5447 | 5548 | 4500 | 5447 | 5050 |
| fti | 0,96 | 0,95 | 0,95 | 0,93 | 0,94 |
| I.I | 97,9 | 97,1 | 97,2 | 97 | 96,4 |
| G | 790 | 660 | 690 | 660 | 660 |
| MFI | 8,8 | 3,1 | 5,1 | 4,9 | 3,8 |
| PSA | 510 | 506 | 500 | 489 | 504 |

(1) La composition cocatalytique de cet exemple est instable et les résultats mentionnés ne sont plus obtenus après deux jours de vieillissement seulement.

L'examen de ce tableau montre que le meilleur compromis de résultats est obtenu avec les systèmes contenant des compositions cocatalytique selon l'invention (exemples 1 et 2).

Exemple 6

On prépare une composition cocatalytique en ajoutant à du DEAC successivement de l'EADC et du BE de manière à obtenir un chlorure d'éthylaluminium de rapport atomique (Cl)/(Al) égal à 1,02 contenant 0,017 mole de BE par mole de chlorure d'éthylaluminium. Les performances de cette composition, utilisée en polymérisation dans les conditions de référence 1 heure après avoir été préparée, sont reprises dans le tableau II ci-après.

Exemple 7 à 12

La composition cocatalytique de l'exemple 6 est divisée en trois fractions [(a), (b), (c)] qui sont stockées respectivement à 0°C, 30°C et 60°C pendant des durées variables avant d'être utilisées en polymérisation dans les conditions de référence.

Le tableau II reprend les conditions de stockage de ces compositions ainsi que les résultats des tests de polymérisation.

Tableau II

| Exemples | 6 | 7 | 8 | 9 | 10 | 11 | 12 |
|---|---|---|---|---|---|---|---|
| Composition cocatalytique | – | (a) | (a) | (b) | (b) | (c) | (c) |
| Température de stockage (C°) | 0 | 0 | 0 | 30 | 30 | 60 | 60 |
| Durée de stockage (jour) | 0 | 19 | 60 | 48 | 230 | 37 | 101 |
| Résultats en polymérisation | | | | | | | |
| α | 6089 | 5448 | 5751 | 6089 | 5750 | 5447 | 6469 |
| fti | 0,96 | 0,96 | 0,95 | 0,94 | 0,94 | 0,96 | 0,94 |
| I.I | 97,7 | 96,9 | 96,5 | 97,4 | 96,1 | 98,5 | 95,8 |
| G | 714 | 676 | 688 | 686 | 670 | 648 | 685 |
| MFI | 9 | 4,5 | 7 | 4,5 | 5,1 | 1,3 | 0,9 |
| PSA | 520 | 511 | 506 | 514 | 511 | 508 | 506 |

Exemple 13R

On prépare une composition cocatalytique en ajoutant successivement à du DEAC du triéthylaluminium et du BE de manière à obtenir une composition de rapport atomique (Cl)/(Al) égal à 0,97 contenant 0,017 mole de BE par mole de chlorure d'éthylaluminium. Testée en polymérisation deux jours après avoir été préparée (conditions de référence), cette composition conduit à l'obtention, avec une activité $\alpha$ de 5447, d'un polymère collant dont l'indice d'isotacticité (I.I) n'est que de 90,4 % et dont la fraction molaire de triades isotactiques (fti) mesurée par RMN n'est que de 0,89.

<u>Exemple 14R et 15R</u>

On prépare une composition cocatalytique en ajoutant successivement à du DEAC de l'EADC et de l'éthylène-glycol-diméthyléther (exemple 14R) ou de la pipérazine (exemple 15R) de manière à obtenir un chlorure d'éthylaluminium de rapport atomique (Cl)/(Al) égal à 1,02 contenant 0,02 mole de composé électodonneur par mole de chlorure d'éthylaluminium.

Les composés électrodonneurs utilisés dans ces exemples n'étant solubles ni dans les halogénures organoaluminiques ni dans les diluants hydrocarbonés inertes, on ne peut obtenir de compositions cocatalytiques homogènes aisément utilisables en polymérisation.

**Revendications**

1. Composition cocatalytique apte à être stockée résultant de la mise en contact d'un halogénure organoaluminique (A) avec un composé organique électrodonneur (ED) choisi parmi les esters, les amides et les cétones, caractérisée en ce que l'halogénure organoaluminique (A), présente un rapport atomique halogène (X)/aluminium (Al) supérieur à 1 et inférieur à 1,3, en ce que l'halogénure (A) et le composé (ED) sont mis en oeuvre dans un rapport molaire halogénure (A)/composé (ED) supérieur à 20 et en ce que le composé organique électrodonneur (ED) est mis en contact avec l'halogénure organoaluminique (A) dans des conditions non polymérisantes, en l'absence d'alpha-oléfine et de solide contenant un halogénure du titane.

2. Composition suivant la revendication 1, caractérisée en ce que l'halogénure organoaluminique (A) est choisi parmi les composés correspondant à la formule globale

$$AlR^1_m R^2_n X_p \qquad (I)$$

dans laquelle

- $R^1$ est choisi parmi les radicaux alkyles, linéaires ou branchés contenant de 2 à 8 atomes de carbone;
- $R^2$ est choisi parmi les radicaux alkyles, linéaires ou branchés contenant de 2 à 8 atomes de carbone et les radicaux aryloxy, éventuellement substitués, contenant de 6 à 35 atomes de carbone ;
- X est un halogène ;
- m et n représentent chacun un nombre quelconque tel que $0 \leq m < 2$ et $0 \leq n < 2$ et p représente un nombre tel que $1 < p < 1,3$, la somme de m, n et p valant 3.

3. Composition suivant la revendication 2, caractérisée en ce que, dans la formule (I), X est le chlore, m représente un nombre tel que $1 \leq m \leq 1,95$ et p représente un nombre tel que $1 < p < 1,15$.

4. Composition suivant l'une quelconque des revendications 1 à 3, caractérisée en ce que l'halogénure organoaluminique (A) est un chlorure d'alkylaluminium présentant un rapport atomique chlore/aluminium tel que $1,01 \leq (Cl)/(Al) \leq 1,08$.

5. Composition suivant la revendication 4, caractérisée en ce que le chlorure d'alkylaluminium est un chlorure d'éthylaluminium.

6. Composition suivant l'une quelconque des revendications 1 à 5, caractérisée en ce que l'halogénure organoaluminique comprend les produits de la réaction d'alkylaluminiums halogénés avec des composés hydroxyaromatiques dont le groupe hydroxyle est stériquement empêché.

7. Composition suivant l'une quelconque des revendications 1 à 6, caractérisée en ce que le rapport molaire halogénure (A)/composé (ED) est compris entre 35 et 150.

8. Composition suivant la revendication 7, caractérisée en ce que le rapport molaire halogénure (A)/composé (ED) est supérieur à 50 sans dépasser 90.

9. Composition suivant l'une quelconque des revendications 1 à 8, caractérisée en ce que le composé organique électrodonneur (ED) est un ester d'acide carboxylique aromatique liquide.

10. Composition suivant la revendication 1, caractérisée en ce que l'halogénure organoaluminique (A) est un chlorure d'alkylaluminium présentant un rapport atomique (Cl)/(Al) compris entre 1,01 et 1,06 et en ce que le composé (ED) est du benzoate d'éthyle mis en oeuvre dans un rapport molaire halogénure (A)/composé (ED) compris entre 52 et 75.

11. Composition suivant la revendication 1, caractérisée en ce que le composé (ED) est mis en contact avec l'halogénure (A) préformé par mélange préalable de composés organoaluminiques de teneurs en halogène et en proportions propres à conférer à l'halogénure (A) un rapport atomique (X)/(Al) supérieur à 1 et inférieur à 1,3.

12. Composition suivant la revendication 1, caractérisée en ce que le composé (ED) est introduit dans l'halogénure (A) maintenu à l'état liquide.

13. Composition suivant l'une quelconque des revendications 1 à 12, caractérisée en ce qu'elle se présente sous la forme liquide.

14. Système catalytique utilisable pour la polymérisation des alpha-oléfines comprenant :

   (a) un solide contenant un halogénure du titane,
   (b) une composition cocatalytique suivant l'une quelconque des revendications 1 à 13.

15. Système suivant la revendication 14, caractérisé en ce que le solide (a) est un solide à base de trichlorure de titane complexé par un composé électrodonneur.

16. Système suivant la revendication 15, caractérisé en ce que le solide (a) répond à la formule :

$$TiCl_3.(AlRCl_2)_x.C_y$$

dans laquelle :

   - R est un radical alkyle comprenant de 2 à 6 atomes de carbone ;
   - x est un nombre quelconque inférieur à 0,20 ;
   - y est un nombre quelconque supérieur à 0,009, et
   - C est l'agent complexant.

17. Système catalytique suivant l'une quelconque des revendications 15 et 16, caractérisé en ce que le solide (a) a été soumis à un traitement d'activation au moyen d'un produit de la réaction d'un composé organoaluminique avec un composé hydroxyaromatique dont le groupe hydroxyle est stériquement empêché.

18. Procédé pour la polymérisation des alpha-oléfines effectué en présence d'un système catalytique suivant l'une quelconque des revendications 14 à 17.

19. Procédé suivant la revendication 18, appliqué à la polymérisation stéréospécifique du propylène.


**Patentansprüche**

1. Lagerfähige Cokatalysator-Zusammensetzung, die.sich dadurch ergibt, daß ein Organoaluminiumhalogenid (A) mit einer unter den Estern, Amiden und Ketonen ausgewählten organischen Elektronendonorverbindung (ED) in Kontakt gebracht wird, dadurch gekennzeichnet, daß das Organoaluminiumhalogenid (A) ein Atomverhältnis Halogen (X) / Aluminium (Al) höher als 1 und niedriger als 1,3 aufweist, dadurch, daß das Halogenid (A) und die Verbindung (ED) in einem Molverhältnis Halogenid (A) / Verbindung (ED) höher als 20 eingesetzt werden, und dadurch, daß die organische Elektronendonorverbindung (ED) mit dem Organoaluminiumhalogenid (A) unter nicht polymerisierenden Bedingungen in Abwesenheit eines alpha-Olefins und eines Feststoffs, der ein Titanhalogenid enthält, in Kontakt gebracht wird.

2. Zusammensetzung gemäß Anspruch 1, dadurch gekennzeichnet, daß das Organoaluminiumhalogenid (A) unter den Verbindungen ausgewählt ist, die der Summenformel

$$AlR_m^1R_n^2X_p \qquad (I)$$

entsprechen, in welcher

- R$^1$ unter den linearen oder verzweigten Alkylresten mit 2 bis 8 Kohlenstoffatomen ausgewählt ist;
- R$^2$ unter den linearen oder verzweigten Alkylresten mit 2 bis 8 Kohlenstoffatomen und den gegebenenfalls substituierten Aryloxyresten mit 6 bis 35 Kohlenstoffatomen ausgewählt ist;
- X ein Halogen ist;
- m und n beide eine beliebige Zahl darstellen, so daß $0 \leq m < 2$ und $0 \leq n < 2$, und p eine solche Zahl darstellt, daß $1 < p < 1,3$, wobei die Summe von m, n und p gleich 3 ist.

3. Zusammensetzung gemäß Anspruch 2, dadurch gekennzeichnet, daß in der Formel (I) X Chlor ist, m eine solche Zahl darstellt, daß $1 \leq m \leq 1,95$, und p eine solche Zahl darstellt, daß $1 < p < 1,15$.

4. Zusammensetzung gemäß einem der Ansprüche 1 bis 3, dadurch gekennzeichnet, daß das Organoaluminiumhalogenid (A) ein Alkylaluminiumchlorid ist, das ein solches Atomverhältnis Chlor/Aluminium aufweist, daß $1,01 \leq (Cl)/(Al) \leq 1,08$.

5. Zusammensetzung gemäß Anspruch 4, dadurch gekennzeichnet, daß das Alkylaluminiumchlorid ein Ethylaluminiumchlorid ist.

6. Zusammensetzung gemäß einem der Ansprüche 1 bis 5, dadurch gekennzeichnet, daß das Organoaluminiumhalogenid die Produkte der Reaktion von halogenhaltigen Aluminiumalkylen mit Hydroxyaromaten, deren Hydroxylgruppe sterisch gehindert ist, umfaßt.

7. Zusammensetzung gemäß einem der Ansprüche 1 bis 6, dadurch gekennzeichnet, daß das Molverhältnis Halogenid (A) / Verbindung (ED) zwischen 35 und 150 liegt.

8. Zusammensetzung gemäß Anspruch 7, dadurch gekennzeichnet, daß das Molverhältnis Halogenid (A) / Verbindung (ED) höher als 50 ist, ohne 90 zu überschreiten.

9. Zusammensetzung gemäß einem der Ansprüche 1 bis 8, dadurch gekennzeichnet, daß die organische Elektronendonorverbindung (ED) ein flüssiger aromatischer Carbonsäureester ist.

10. Zusammensetzung gemäß Anspruch 1, dadurch gekennzeichnet, daß das Organoaluminiumhalogenid (A) ein Alkylaluminiumchlorid ist, das ein Atomverhältnis (Cl)/(Al) zwischen 1,01 und 1,06 aufweist, und dadurch, daß die Verbindung (ED) Ethylbenzoat ist, das in einem Molverhältnis Halogenid (A) / Verbindung (ED) zwischen 52 und 75 eingesetzt wird.

11. Zusammensetzung gemäß Anspruch 1, dadurch gekennzeichnet, daß die Verbindung (ED) mit dem Halogenid (A) in Kontakt gebracht wird, das durch vorheriges Mischen von Organoaluminiumverbindungen mit Chlorgehalten und in Verhältnissen, die geeignet sind, um dem Halogenid (A) ein Atomverhältnis (X)/(Al) höher als 1 und niedriger als 1,3 zu verleihen, vorab gebildet wird.

12. Zusammensetzung gemäß Anspruch 1, dadurch gekennzeichnet, daß die Verbindung (ED) zu dem in flüssigem Zustand gehaltenen Halogenid (A) hinzugefügt wird.

13. Zusammensetzung gemäß einem der Ansprüche 1 bis 12, dadurch gekennzeichnet, daß sie in flüssiger Form auftritt.

14. Für die Polymerisation von alpha-Olefinen verwendbares Katalysator-System, das umfaßt:

(a) einen Feststoff, der ein Titanhalogenid enthält,
(b) eine Cokatalysator-Zusammensetzung gemäß einem der Ansprüche 1 bis 13.

15. System gemäß Anspruch 14, dadurch gekennzeichnet, daß der Feststoff (a) ein Feststoff auf der Basis von mit einer Elektronendonorverbindung komplexiertem Titantrichlorid ist.

16. System gemäß Anspruch 15, dadurch gekennzeichnet, daß der Feststoff (a) der Formel:

$$TiCl_3 \cdot (AlRCl_2)_x \cdot C_y$$

entspricht, in welcher

- R ein Alkylrest mit 2 bis 6 Kohlenstoffatomen ist;
- x eine beliebige Zahl kleiner als 0,20 ist;
- y eine beliebige Zahl größer als 0,009 ist und
- C das Komplexierungsmittel ist.

17. Katalysator-System gemäß einem der Ansprüche 15 und 16, dadurch gekennzeichnet, daß der Feststoff (a) einer Aktivierungsbehandlung mittels eines Produktes der Reaktion einer Organoaluminiumverbindung mit einem Hydroxyaromaten, dessen Hydroxylgruppe sterisch gehindert ist, unterworfen wurde.

18. Verfahren zur Polymerisation von alpha-Olefinen, das in Gegenwart eines Katalysator-Systems gemäß einem der Ansprüche 14 bis 17 ausgeführt wird.

19. Verfahren gemäß Anspruch 18, das auf die stereospezifische Polymerisation von Propylen angewendet wird.

## Claims

1. Cocatalytic composition capable of being stored, resulting from bringing an organoaluminium halide (A) into contact with an electron-donating organic compound (ED) selected from esters, amides and ketones, characterised in that the organoaluminium halide (A) possesses an atomic ratio halogen (X)/aluminium (A1) of greater than 1 and less that 1.3, and in that the halide (A) and the compound (ED) are employed in a mole ratio halide (A)/compound (ED) of greater than 20 and in that the electron-donating organic compound (ED) is brought into contact with the organo-aluminium halide (A) under non-polymerising conditions, in the absence of alpha-olefin and of solid containing a titanium halide.

2. Composition according to Claim 1, characterised in that the organoaluminium halide (A) is selected from the compounds corresponding to the overall formula

$$AlR^1_m R^2_n X_p \qquad (I)$$

in which

- $R^1$ is selected from linear or branched alkyl radicals comprising from 2 to 8 carbon atoms.
- $R^2$ is selected from linear or branched alkyl radicals comprising from 2 to 8 carbon atoms and optionally substituted aryloxy radicals comprising from 6 to 35 carbons atoms;
- X is a halogen;
- m and n each represent any number such that $0 \leq m < 2$ and $0 \leq n < 2$, and p represents a number such that $1 < p < 1.3$, the sum of m, n and p equalling 3.

3. Composition according to Claim 2, characterised in that, in the formula (I), X is chlorine, m represents a number $1 \leq m \leq 1.95$ and p represents a number such that $1 < p < 1.15$.

4. Composition according to any one of Claims 1 to 3, characterised in that the organoaluminium halide (A) is an alkylalumimium chloride possessing an atomic ratio chlorine/aluminium such that $1.01 \leq (Cl)/(Al) \leq 1.08$.

5. Composition according to Claim 4, characterised in that the alkylaluminium chloride is an ethylaluminium chloride.

6. Composition according to any one of Claims 1 to 5, characterised in that the organoaluminium halide comprises the products of the reaction of halogenated alkylaluminium compounds with hydroxyaromatic compounds in which the hydroxyl group is sterically hindered.

7. Composition according to any one of Claims 1 to 6, characterised in that the mole ratio halide (A)/compound (ED) is between 35 and 150.

8. Composition according to Claim 7, characterised in that the mole ratio halide (A)/compound (ED) is greater than 50 without exceeding 90.

9. Composition according to any one of Claims 1 to 8, characterised in that the electron-donating organic compound (ED) is a liquid aromatic carboxylic acid ester.

10. Composition according to Claim 1, characterised in that the organoaluminium halide (A) is an alkylaluminium chloride possessing an atomic ratio (Cl)/(Al) of between 1.01 and 1.06 and in that the compound (ED) is ethyl benzoate employed in a mole ratio halide (A)/compound (ED) of between 52 and 75.

11. Composition according to Claim 1, characterised in that the compound (ED) is brought into contact with the halide (A) preformed by prior mixing of organoaluminium compounds having halogen contents and in proportions suitable for conferring on the halide (A) an atomic ratio (X)/(Al) of greater than 1 and less than 1.3.

12. Composition according to Claim 1, characterised in that the compound (ED) is introduced into the halide (A) maintained in the liquid state.

13. Composition according to any one of claims 1 to 12, characterised in that it takes liquid form.

14. Catalytic composition which is usable for the polymerisation of alpha-olefins, comprising :

(a) a solid containing a titanium halide,
(b) a cocatalytic composition according to any one of Claims 1 to 13.

15. System according to Claim 14, characterised in that the solid (a) is a solid based on titanium trichloride complexed with an electron-donating compound.

16. System according to Claim 15, characterised in that the solid (a) corresponds to the formula :

$$TiCl_3.(AlRCl_2)_x.C_y$$

in which

- R is an alkyl radical comprising from 2 to 6 carbon atoms;
- x is any number less than 0.20;
- y is any number greater than 0.009; and
- C is the complexing agent.

17. Catalytic system according to either of Claims 15 and 16, characterised in that the solid (a) has been subjected to an activation treatment by means of a product of the reaction of an organoaluminium compound with a hydroxyaromatic compound in which the hydroxyl group is sterically hindered.

18. Process for the polymerisation of alpha-olefins, performed in the presence of a catalytic system according to any one of Claims 14 to 17.

19. Process according to Claim 18, applied to the stereospecific polymerisation of propylene.